# EUROPEAN PATENT APPLICATION

(11) **EP 1 753 041 A2**
(43) Date of publication of application: **14.02.2007**
(21) Application number: 06016740.0
(22) Date of filing: 10.08.2006
(51) Int. Cl.: H01L 41/09, G02B 7/10

(54) **Actuator**

(30) Priority: 12.08.2005 JP 2005234644
(71) Applicant: Fujinon Corporation, Saitama-shi, Saitama (JP)
(72) Inventor: Sasaki, Ryota, Saitama-shi Saitama (JP)
(74) Representative: Klunker, Hans-Friedrich

(57) **Abstract**

An actuator comprises: an electro-mechanical conversion element; a driving frictional member mounted onto one side in an extension/contraction direction of the electro-mechanical conversion element; a driven member engaged with the driving frictional member; and a sliding member that is supported on the driven member and slides along the driving frictional member, wherein the sliding member and the driving frictional member are in plane contact.

## Description

### Background of the Invention

### 1. Field of the Invention

The present invention relates to an actuator, and particularly relates to an actuator that is installed in a digital camera, mobile phone, or other compact precision apparatus and drives a zoom lens.

### 2. Description of the Related Art

As a driving device for a lens unit of a digital camera, etc., an actuator that employs a piezoelectric element is used. For example, with an actuator of Japanese Patent No. 2633066, a driving shaft is affixed to one side of a piezoelectric element, and the other side of the piezoelectric element is fixed to a main device body. A lens barrel is slidably supported on the driving shaft, and the lens barrel is frictionally engaged with the driving shaft by making use of an urging force of a plate spring. Drive pulses of substantially sawtooth-like waveform are applied to the piezoelectric element, and the piezoelectric element deforms at different speeds in an extension direction and a contraction direction. For example, when the piezoelectric element deforms gradually, the lens barrel moves along with the driving shaft. Oppositely, when the piezoelectric element deforms rapidly, the lens barrel stays at the same position due to its mass inertia. Thus by repeatedly applying drive pulses of substantially sawtooth-like waveform to the piezoelectric element, the lens barrel can be moved intermittently at a fine pitch.

However, with the related-art actuator, the frictional force between the drivenmember and the driving frictional member is unstable and the driving member cannot be moved at a stable speed and thrust.

Also with the related-art actuator, the area of contact of the driven member with the driving frictional member is small and an adequate thrust cannot be obtained for the driven member.

### Summary of the Invention

The present invention has been made in view of the above circumstances, and an object thereof is to provide an actuator that can perform stable drive control.

To achieve the above object, according to a first aspect of the invention, there is provided an actuator comprising: an electro-mechanical conversion element; a driving frictional member mounted onto one side in an extension/contraction direction of the electro-mechanical conversion element; a driven member engaged with the driving frictional member; and a sliding member that is supported on the driven member and slides along the driving frictional member, wherein the sliding member and the driving frictional member are in plane contact.

With the first aspect of the invention, because the sliding member and the driving frictional member are in plane contact, a stable sliding resistance can be obtained between the components. Thus with the invention of the first claim, stable drive control of the driven member is enabled.

Also with the first aspect of the invention, because the sliding member and the driving frictional member are in plane contact, an adequate frictional force can be secured. Thus with the first aspect of the invention, an adequate thrust can be secured for the driven member.

A second aspect of the invention provides the actuator according to the first aspect of the invention, further comprising an urging portion that is mounted onto the driven member and urges the driven member and the driving frictional member in an engaging direction, wherein the sliding member is formed integrally with the urging portion.

A third aspect of the invention provides the actuator according to the first or second aspect of the invention, wherein the driving frictional member is formed into a rectangular columnar shape.

A fourth aspect of the invention provides the actuator according to any of the first to third aspects of the invention, wherein the sliding member is positioned at respective sides of the driving frictional member.

A fifth aspect of the invention provides the actuator according to any of the first to fourth aspects of the invention, wherein a holding frame of a zoom lens is mounted onto the driven member.

### Brief Description of the Drawings

FIG. 1 is a perspective view of a lens device to which an actuator according to the present invention is applied;
FIG. 2 is a perspective view of an internal arrangement of the lens device of FIG. 1;
FIG. 3 is a perspective view of the lens device as viewed from a different direction as FIG. 2;
FIG. 4 is a perspective view of an arrangement of the actuator;
FIG. 5 is a sectional view of a connection portion of a driving shaft and a connecting block;
FIGS. 6A and 6B show diagrams of examples of voltage drive pulses that are applied to a piezoelectric element;
FIG. 7 is a sectional view of a connecting portion of an arrangement that differs from that of FIG. 5; and
FIG. 8 is a sectional view of a connecting portion of an arrangement that differs from that of FIG. 5.

### Detailed Description of the Invention

Preferred embodiments of an actuator according to the present invention shall nowbe described in detail with reference to the attached drawings.

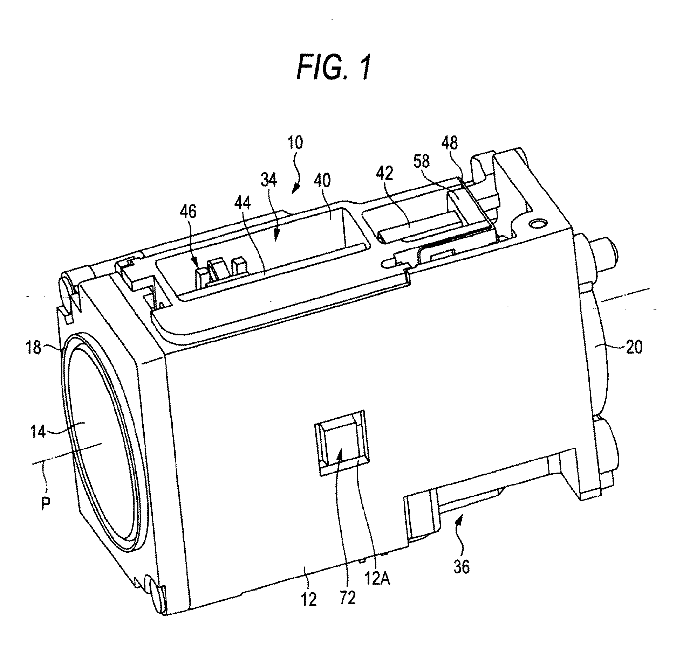

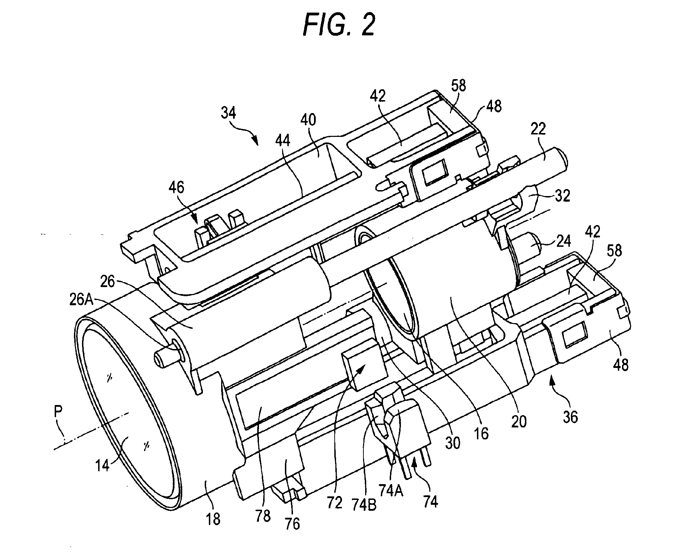

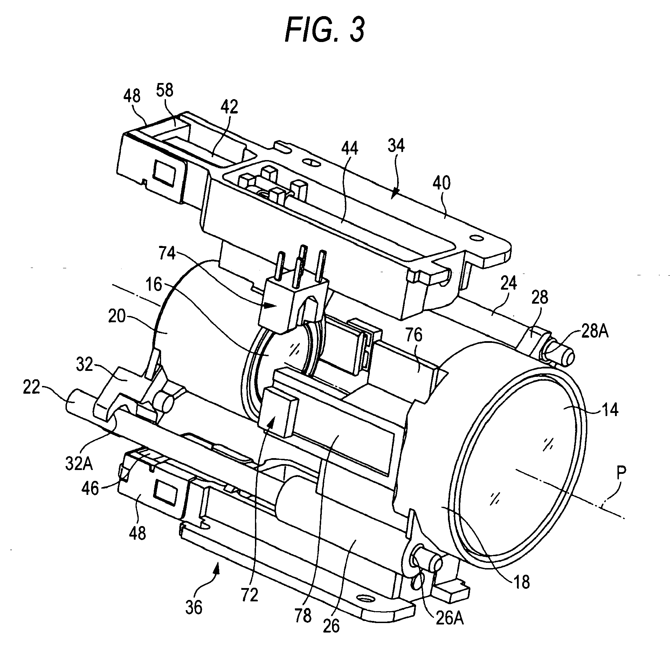

FIG. 1 is a perspective view of a lens device 10 to which an actuator according to the present invention is applied, and FIGS. 2 and 3 are perspective views of an internal arrangement of this device.

As shown in FIG. 1, the lens device 10 has a main body 12, formed to a substantially rectangular shape, and has zoom lenses (groups) 14 and 16 in the interior of the main body 12 as shown in FIGS. 2 and 3. Of the zoom lenses (groups) 14 and 16, one is a variator lens and the other is a compensator lens. The zoom lenses (groups) 14 and 16 are respectively held in holding frames 18 and 20, and these holding frames 18 and 20 are supported by two guide shafts 22 and 24 in a manner enabling sliding along an optical axis P direction. The two guide shafts 22 and 24 are disposed in parallel to the optical axis P at diagonal positions inside the main body 12 and are fixed to the main body 12.

The holding frame 18 has a guide portion 26, having an insertion hole 26A through which the guide shaft 22 is inserted, and an engaging portion 28, having a U-shaped groove 28A that is engaged with the guide shaft 24. The holding frame 18 is thereby guided by the two guide shafts 22 and 24, and the zoom lens (group) 14 is supported in a manner enabling movement along the optical axis P direction. Likewise, the holding frame 20 of the zoom lens 16 has a guide portion 30, having an insertion hole (not shown) through which the guide shaft 24 is inserted, and an engaging portion 32, having a U-shaped groove 32A, with which the guide shaft 22 is engaged. The holding frame 20 is thereby guided by the two guide shafts 22 and 24, and the zoom lens (group) 16 is supported in a manner enabling movement along the optical axis P direction.

The zoom lenses (groups) 14 and 16 are driven along the optical axis P direction by means of actuators 34 and 36, respectively. The actuators 34 and 36 are disposed at opposing faces of the main body 12. Specifically, the actuator 34 for the zoom lens (group) 14 is disposed on an upper face of the main body 12 in FIG. 1, and the actuator 36 for the zoom lens (group) 16 is disposed on a lower face of the main body 12. Though a description of the actuator 34 shall be provided below, the actuator 36 is arranged in the same manner.

Symbols 72 and 74 in FIGS. 1 to 3 indicate position detectors that detect positions of the holding frame 18 and the holding frame 20. The position detector 72 is a reflection type photointerrupter that is disposed opposite a plate-like reflecting portion 78, formed integral to the holding frame 18 (or the holding frame 20), and is fitted and fixed in an opening 12A of the main body 12 (see FIG. 1) . On the reflecting portion 78, a plurality of reflecting bodies (not shown) are disposed at fixed intervals along the driving direction. Light is thus projected from the position detector 72 to the reflecting portion 78, and by receiving the reflected light and detecting the variation of the light amount, the movement amount of the reflecting portion 78 (that is, the holding frame 18 or 20) can be detected. Meanwhile, the position detector 74 has a light projecting portion 74A and a light receiving portion 74B, and a plate-like light blocking portion 76 that is formed integral to the holding frame 18 (or the holding frame 20) is inserted into and drawn out from in between the light projecting portion 74A and the light receiving portion 74B. Thus by the light blocking portion 76 being inserted between the light emitting portion 74A and the light receiving portion 74B and the light amount detected by the light receiving portion 74B varying accordingly, that the light blocking portion 76 (that is, the holding frame 18 or 20) has moved to a predetermined position can be detected. By thus detecting reference positions of the holding frames 18 and 20 by means of the position detector 74 and detecting the moving amounts of the holding frames 18 and 20 by means of the position detector 72, the positions of the holding frames 18 and 20 can be determined accurately. The actuators 34 and 36 are driven and controlledbasedonmeasurement values of the position detectors 72 and 74.

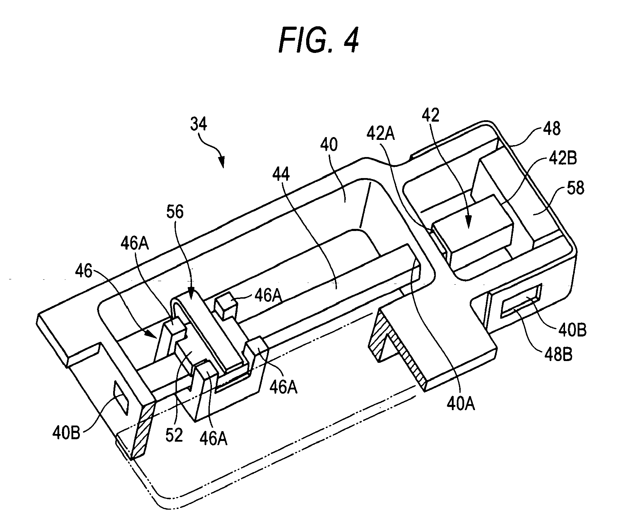

FIG. 4 is a perspective view of an arrangement of the actuator 34. As shown in this figure, the actuator 34 is mainly arranged from a fixed frame 40, a piezoelectric element (corresponding to being an electro-mechanical conversion element) 42, a driving shaft (corresponding to being a driving frictional member) 44, aconnectingblock (correspondingtobeing a driven member) 46, and a mounting bracket 48, and the fixed frame 40 is fixed to the main body 12 of the lens device 10 of FIG. 1.

The piezoelectric element 42 is layered along the optical axis P direction (hereinafter, "driving direction") of the lens device 10 and is arranged to deform (extend or contract) along the driving direction upon application of voltage. Thus with the piezoelectric element 42, end faces 42A and 42B in the longitudinal direction become displaced along the driving direction upon application of voltage.

Of the end faces 42A and 42B of the piezoelectric element 42, a base end of the driving shaft 44 is affixed to one end face 42A, and a weight member 58, formed of a soft material, is fixed by adhesion onto the other end face 42B.

By applying a load to the end face 42B, the weight member 58 prevents the end face 42B from becoming displaced more than the end face 42A. Thus as the weight member 58, a member that is greater in weight than the driving shaft 44 is preferable. Also, the weight member 58 is formed of a material with a Young' s modulus less than that of each of the piezoelectric element 42 and the driving shaft 44 and, for example, is formed of a material with a Young's modulus of no more than 300MPa. For example, the weight member 58 is formed of urethane rubber or urethane resin, etc., and is manufactured by mixing a powder of tungsten or other metal into the rubber or resin to make the specific gravity high. To achieve compact size, the specific gravity of the weight member 58 is preferably made as high as possible and is set, for example, to approximately 8 to 12.

The weight member 58 is adhered onto the mounting bracket 48 at the side opposite the piezoelectric element 42. The mounting bracket 48 is formed by bending a thin metal plate to a square C-shape and openings 48B are formed at the bent portions at both ends. The mounting bracket 48 is mounted onto the fixed frame 40 by fitting protrusions 40B of the fixed frame 40 into the openings 48B. The piezoelectric element 42 is thus supported on the fixed frame 40 via the weight member 58 and the mounting bracket 48.

The piezoelectric element 42 that is thus supported is supported in a manner in which the end face 42B can be displaced along the driving direction. That is, the end face 42B can be displaced along the driving direction by the expansion or contraction of the soft weight member 58 or the warping of the mounting bracket 48.

Meanwhile, the driving shaft 44 which is affixed to the end face 42A of the piezoelectric element 42 is formed to a rectangular columnar shape and is positioned so that its central axis lies along the driving direction. The driving shaft 44 is inserted through two holes 40A formed in the fixed frame 40 and is thereby guided and supported in a manner enabling sliding along the central axis direction. As the material of the driving shaft 44, a graphite crystal composite, such as carbon graphite, in which graphite crystals are compounded firmly, is used.

As shown in FIG. 4, a connecting block 46 is engaged with the driving shaft 44. The connecting block 46 is connected to the holding frame 18 of the zoom lens 14 and is supported in a manner enabling sliding along the optical axis P direction (the driving direction) along with the holding frame 18. The connecting block 46 is formed to a rectangular shape, and upwardly protruding protrusions 4 6A are respectively provided on the four corners thereof.

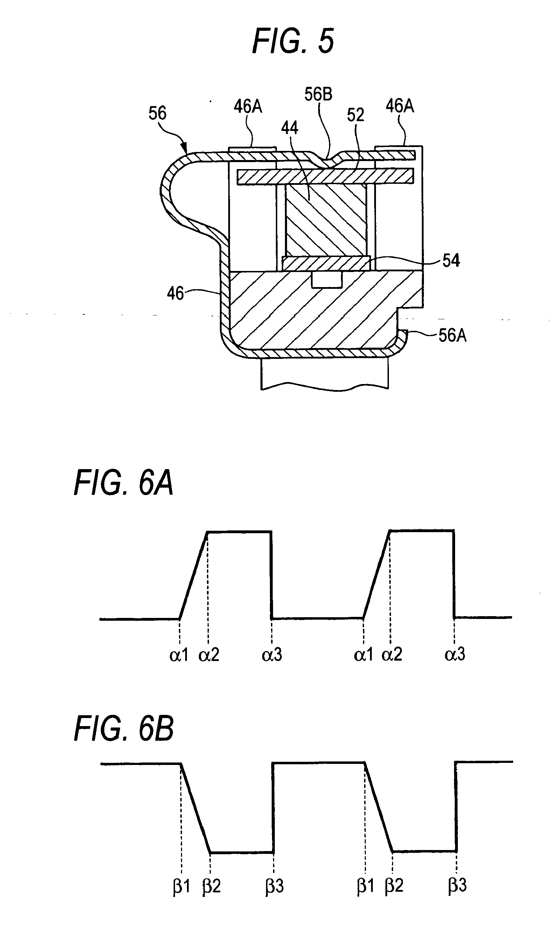

FIG. 5 is a sectional view of the connection portion of the connecting block 46 and the driving shaft 44. As shown in this FIGURE, a first slidingmember 52 and a second slidingmember 54 are provided at the connection portion of the connecting block 46 and the driving shaft 44. The first sliding member 52 is disposed at an upper side of the driving shaft 44, and the second sliding member 54 is disposed at a lower side of the driving shaft 44. The first sliding member 52 and the second sliding member 54 are members that are provided to obtain a stable frictional force between the connecting block 46 and the driving shaft 44 and are formed, for example, from stainless steel.

The first sliding member 52 and the second sliding member 54 are formed to plate-like shapes, and the second sliding member is fixed to the connecting block 46. The first sliding member 52 is notched at its respective corner portions in accordance to the protrusions 46A of the connecting block 46, and the first sliding member 52 is positioned in the region surrounded by the protrusions 46A.

A pressing spring 56 is mounted onto the connecting block 46. The pressing spring 56 is arranged by bending a metal plate and is mounted onto the connecting block 46 by hitching a claw 56Aonto a lower portion of the connecting block 46. The pressing spring 56 also has a pressing portion 56B that is positioned on an upper side of the first sliding member 52 and is arranged to urge the first sliding member 52 downward by the pressing portion 56B. The driving shaft 44 is thereby put in a state of being sandwichingly pressed by the first sliding member 52 and the second sliding member 54, and the connecting block 46 is frictionally engaged with the driving shaft 44 via the first sliding member 52 and the second sliding member 54. In this state, the first sliding member 52 and the second sliding member 54 are in plane contact with the driving shaft 44 that is formed to a rectangular columnar shape.

The frictional force between the connecting block 46 and the driving shaft 44 is set so that when drive pulses of a gradual voltage variation is applied to the piezoelectric element 42, the frictional force is greater than the driving force, and when drive pulses of a rapid voltage variation is applied to the piezoelectric element 42, the frictional force is less than the driving force. Here, the frictional force (sliding resistance) is preferably no less than 10gf and no more than 30gf and more preferably no less than 15gf and no more than 25gf.

The voltages of the drive pulses shown in FIGS. 6A and 6B are applied to the piezoelectric element 42. FIG. 6A shows the drive pulses for moving the connecting block 46 of FIG. 4 in the left direction, and FIG. 6B shows the drive pulses for moving the connecting block 46 of FIG. 4 in the right direction.

In the case of FIG. 6A, substantially sawtooth-like drive pulses, each of which rises gradually from a time α1 to a time α2 and drops rapidly at a time α3, are applied to the piezoelectric element 42. Thus from the time α1 to the time α2, the piezoelectric element 42 extends gradually. Because in this process, the driving shaft 44 moves at a gradual speed, the connecting block 46 moves along with the driving shaft 44. The connecting block 46 of FIG. 4 can thereby be moved in the left direction. At the time α3, because the piezoelectric element 42 contracts rapidly, the driving shaft 44 moves in the right direction. Because in this process, the driving shaft 44 moves rapidly, the connecting block 46 remains stopped at the same position due to inertia and just the driving shaft 44 moves. Thus by applying the sawtooth drive pulses shown in FIG. 6A repeatedly, the connecting block 46 of FIG. 4 is made to repeat movement in the left direction and stoppage, and can thus be moved in the left direction.

In the case of FIG. 6B, substantially sawtooth-like drive pulses, each of which drops gradually from a time β1 to a time β2 and rises rapidly at a time β3, are applied to the piezoelectric element 42. Thus from the time β1 to the time β2, the piezoelectric element 42 contracts gradually. Because in this process, the driving shaft 44 is displaced at a gradual speed, the connecting block 46 moves along with the driving shaft 44. The connecting block 46 of FIG. 4 can thereby be moved in the right direction. At the time β3, because the piezoelectric element 42 extends rapidly, the driving shaft 44 moves in the left direction. Because in this process, the driving shaft 44 moves rapidly, the connecting block 46 remains stopped at the same position due to inertia and just the driving shaft 44 moves. Thus by applying the sawtooth drive pulses shown in FIG. 6B repeatedly, the connecting block 46 of FIG. 4 is made to repeat movement in the right direction and stoppage, and can thus be moved in the right direction.

The actions of the actuator 34 arranged as described above shall now be described.

With the actuator 34, because the driving shaft 44 is formed to a rectangular columnar shape and the first sliding member 52 and the second sliding member 54 are formed to planar shapes, the first sliding member 52 and the second sliding member are in plane contact with the driving shaft 44. An adequate frictional force is thus secured between the driving shaft 44 and the first sliding member 52 and the second sliding member 54. Thus in this state, when pulse-form voltages are applied to the piezoelectric element 42 and the connecting block 46 is moved along the driving shaft 44, the connecting block 46 can be moved with adequate thrust.

Thus with the actuator 34 according to this embodiment, because the driving shaft 44 is put in plane contact with the first sliding member 52 and the second sliding member 54, an adequate frictional force can be obtained and the connecting block 46 can be moved with adequate thrust.

Also with the actuator 34 according to this embodiment, because the driving shaft 44 is put in plane contact with the first sliding member 52 and the second sliding member 54, fluctuation of the sliding resistance of the first slidingmember 52 and the second sliding member 54 can be restrained when the connecting block 46 is moved along the driving shaft 44. Stable drive control of the connecting block 46 can thus be performed with the present embodiment.

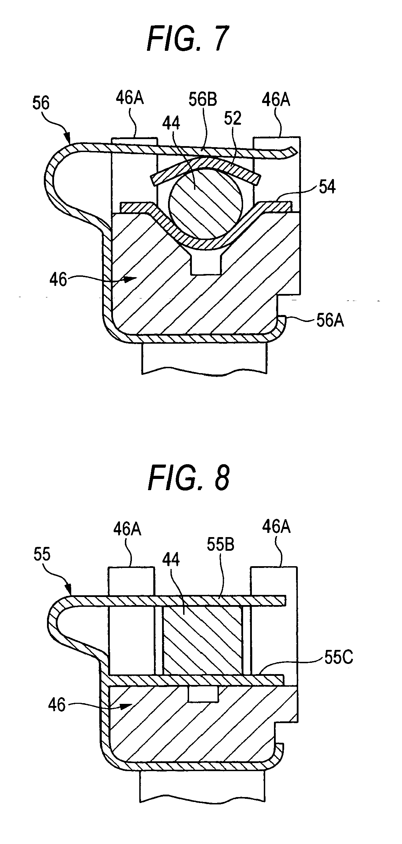

Though with the above-described embodiment, the driving shaft 44 is formed to a rectangular columnar shape and the first sliding member 52 and the second sliding member 54 are formed to planar shapes, the shapes of the driving shaft 44, the first sliding member 52, and the second sliding member 54 are not restricted thereto and these may be formed in any way as long as the driving shaft 44 is in plane contact with the first sliding member 52 and the second sliding member 54. The driving shaft 44 may thus have a polygonal column shape, such as a hexagonal columnar shape, an octagonal columnar shape, etc. Also as shown in FIG. 7, the driving shaft 44 may be formed to a cylindrical shape, and the first sliding member 52 and the second sliding member 54 may be formed to arcuate shapes so that the driving shaft 44 is put in plane contact along curved surfaces with the first sliding member 52 and the second sliding member 54.

Also with the present embodiment, though the first sliding member 52 and the second slidingmember 54 are disposed separately, these may be formed integral to the pressing spring 56, which is an urging portion. For example, as shown in FIG. 8, the first sliding member 55B and the second sliding member 55C may be formed integral to the pressing spring 55 and the driving shaft 44 may be held sandwichingly by the first sliding member 55B and the second sliding member 55C. By providing the first sliding member 55B and the second sliding member 55C on the pressing spring 55 in such a manner, the number of parts can be reduced and the ease of assembly can be improved.

Also with the present embodiment, though the connecting block 46 is made to slide along the driving shaft 44 via the second sliding member 54, the connecting block 46 and the driving shaft 44 may be arranged to slide directly with respect to each other.

Though the material of the weight member 58 in the present invention is not restricted to the above-described soft material and a hard material may be used, the use of a soft material is preferable from the following points. That is, by using the weight member 58 formed of a soft material, the resonance frequency of the system arranged from the piezoelectric element 42, the driving frictional member 44, and the weight member 58 is made low. By the resonance frequency being made low, effects due to vibration in arrangements of the piezoelectric element 42, the driving frictional member 44, and the weight member 58 are lessened, and a stable driving force can be obtained. Also, by the resonance frequency f₀ being made low, the driving frequency f can be set readily in a vibration-proof region of f≧2^{1/2} · f₀ to lessen the effects of resonance and enable a stable driving force to be obtained. Because the driving force due to extension and contraction of the piezoelectric element 42 is thereby transmitted to the driven member reliably, the driven member can be moved accurately in the extension/contraction direction of the piezoelectric element 42. Also because the effects due to resonance are lessened by the resonance frequency f₀ being made low, the supporting position and supporting method of the actuator can be selected arbitrarily, and for example, the actuator can be supported at the end face 42A or a side face of the piezoelectric element 42 and a side face or an end face of driving shaft 44.

With the actuator according to the present invention, because the sliding member and the driving frictional member are in plane contact, an adequate thrust can be secured for the driven member and stable drive control is enabled.

The entire disclosure of each and every foreign patent application from which the benefit of foreign priority has been claimed in the present application is incorporated herein by reference, as if fully set forth.

## Claims

1. An actuator comprising:
an electro-mechanical conversion element;
a driving frictional member mounted onto one side in an extension/contraction direction of the electro-mechanical conversion element;
a driven member engaged with the driving frictional member; and
a sliding member that is supported on the driven member and slides along the driving frictional member,
wherein the sliding member and the driving frictional member are in plane contact.

2. The actuator according to Claim 1, further comprising an urging portion that is mounted onto the driven member and urges the driven member and the driving frictional member in an engaging direction,
wherein the sliding member is formed integrally with the urging portion.

3. The actuator according to Claim 1,
wherein the driving frictional member is formed into a rectangular columnar shape.

4. The actuator according to Claim 1,
wherein the sliding member is positioned at respective sides of the driving frictional member.

5. The actuator according to Claim 1,
wherein a holding frame of a zoom lens is mounted onto the driven member.
